# EUROPÄISCHE PATENTSCHRIFT

(11) **EP 2 038 805 B1**
(45) Veröffentlichungstag und Bekanntmachung des Hinweises auf die Patenterteilung: **28.08.2019**
(21) Anmeldenummer: 07726068.5
(22) Anmeldetag: 19.06.2007
(51) Int. Cl.: G06F 21/62

(54) **VERFAHREN ZUM DELEGIEREN VON PRIVILEGIEN AN EINE NIEDRIGER-PRIVILEGIERTE INSTANZ DURCH EINE HÖHER-PRIVILEGIERTE INSTANZ**
METHOD FOR DELEGATING PRIVILEGES TO A LOWER LEVEL PRIVILEGE INSTANCE BY A HIGHER LEVEL PRIVILEGE INSTANCE
PROCÉDÉ DE DÉLÉGATION DE PRIVILÈGES À UNE INSTANCE PRIVILÉGIÉE INFÉRIEURE PAR UNE INSTANCE PRIVILÉGIÉE SUPÉRIEURE

(30) Priorität: 27.06.2006 DE 102006029756
(43) Veröffentlichungstag der Anmeldung: 25.03.2009
(73) Patentinhaber: T-Mobile International AG, 53227 Bonn (DE); Deutsche Telekom AG, 53113 Bonn (DE)
(72) Erfinder: WILHELM, Uwe, 53227 Bonn (DE); JORDAN, Katrin, 53113 Bonn (DE); SCHRÖDER, Stefan, 53227 Bonn (DE); HILLEBRAND, Rainer, 53229 Bonn (DE)
(74) Vertreter: Riebling, Peter
(86) Internationale Anmeldenummer: PCT/EP2007/005364
(87) Internationale Veröffentlichungsnummer: WO 2008/000369

(56) Entgegenhaltungen:
- EP-A- 1 550 931
- EP-A1- 1 139 196
- EP-A1- 1 353 259
- WO-A2-03/100581
- DE-A1- 10 302 637
- GB-A- 2 400 194
- US-A- 5 956 505
- US-A1- 2004 193 917
- US-A1- 2005 091 422
- US-A1- 2006 101 408
- wiki: "Windows Installer", wikipedia , 2 June 2006 (2006-06-02), Retrieved from the Internet: URL:http://en.wikipedia.org/w/index.php?ti tle=Windows_Installer&oldid=56470697 [retrieved on 2013-12-20]
- "Symbian OS v9 Security Architecture", INTERNET CITATION, 24 February 2005 (2005-02-24), XP002401497, Retrieved from the Internet: URL:http://www.symbian.com/Developer/techl ib/v9.1docs/doc_source/guide/N10022/SGL.SM 0007.013_Rev2.0_Symbian_OS_Security_Archit ecture.doc [retrieved on 2006-10-04]

## Beschreibung

Um einer Instanz auf einem Gerät, wie z.B. einem mobilen Terminal, kontrolliert Privilegien zu vergeben, richtet eine höher-privilegierte Instanz, die das spezielle Privileg besitzt, selbst Privilegien zu vergeben, die Privilegien der niedriger-privilegierten Instanz auf dem Gerät ein. Hierzu ist es üblicherweise notwendig, dass ein Mensch einen physikalischen Zugriff auf ein solches Gerät haben muss.

Ein Beispiel für ein Privileg ist das Zugriffsrecht auf eine Funktion eines Geräts. Ob eine Instanz das erforderliche Privileg besitzt, könnte z.B. mittels einer kryptografischen Signatur, mit der die Instanz versehen ist, verifiziert werden. Dazu könnte z.B. einer Funktion, wie z.B. das Lesen einer Kontaktliste, im Gerät ein so genanntes Root-Zertifikat für Code Signing zugeordnet werden. Wenn die Signatur auf der Instanz erfolgreich mit dem Root-Zertifikat verifiziert werden kann, erhält die Instanz das Privileg, bei Bedarf auf die Funktion zuzugreifen.

Eine höher-privilegierte Instanz könnte z.B. eine Software sein. Üblicherweise wird das folgende Verfahren angewendet:
Ein Mensch, z.B. ein so genannter Administrator, versetzt ein Gerät in einen Zustand, in dem er die nötigen Privilegien zum Ausführen einer Software hat, mit der die Privilegien für eine niedriger-privilegierte Software eingerichtet werden können. Dieser Zustand kann auch als so genannter Administrationszustand bezeichnet werden.
Derjenige, der die niedriger-privilegierte Software nutzt, kann das Gerät üblicherweise nicht in diesen Administrationszustand versetzen.
Die Software zum Einrichten der Privilegien wird vom Administrator ausgeführt und die Privilegien werden eingerichtet.

Der Administrator führt das Gerät wieder aus dem Administrationszustand heraus.

Der Nachteil des üblicherweise angewendeten Verfahrens besteht darin, dass ein Administrator den physikalischen Zugriff auf das Gerät braucht. Entweder der Administrator geht bzw. fährt zum Ort, an dem sich das Gerät befindet, oder das Gerät wird zu dem Administrator gebracht. In beiden Fällen werden Kosten erzeugt: im ersten Fall durch Zeiten, in denen der Administrator auf dem Weg zum Gerät nicht arbeiten kann, oder durch Transportmittel wie Auto oder Zug. Im zweiten Fall durch den Nutzungsausfall oder auch den Transport des Geräts. In beiden Fällen entstehen zudem weitere Kosten aufgrund der Arbeitszeiten, die für die individuelle Einrichtung und Administration notwendig sind. Hinzu kommen Aufwände für Schulungen usw.

Diese Problemstellung sollte nicht mit dem Import eines zusätzlichen Root-Zertifikats in einen Browser o.ä. durch den Nutzer verwechselt werden. Letzteres ist nicht mit einer Vergabe von Privilegien (Authorisierung) an signierte Instanzen verbunden. Es erlaubt lediglich die Authentisierung signierter Instanzen.

EP 1 353 259 A1 offenbart ein Verfahren zum Betreiben eines Computer-Systems, bei dem ein lauffähiges Hauptmodul eines Programms auf dem Computersystem installiert und Moduldaten für das Hauptmodul und/oder für ein Zusatzmodul des Programms im. Computersystem abgespeichert werden, wobei die abgespeicherten Moduldaten einen Lizenzteil, der zu Feststellung des Vorliegens der Nutzungsberechtigung des Haupt- und/oder Zusatzmoduls benötigt wird, und bevorzugt noch einen Informationsteil enthalten. Die abgespeicherten Moduldaten werden für einen Erwerb einer, weiteren Nutzungsberechtigung für das Zusatzmodul oder für ein weiteres Zusatzmodul ausgewertet und Informationen für den Nutzungsberechtigungserwerb in Abhängigkeit des Auswerteergebnisses bereitgestellt.

US2006101408 offenbart ein Verfahren zum Installieren und Einrichten von Privilegien für Software-Anwendungen.

Die Aufgabe der Erfindung besteht daher darin, ein verbessertes Verfahren zum Delegieren von Privilegien an eine niedriger-privilegierte Instanz durch eine höher-privilegierte Instanz anzugeben.

Diese Aufgabe wird erfindungsgemäß durch die Merkmale des Anspruchs 1 gelöst, auf dessen Wortlaut an dieser Stelle verwiesen wird.

Bevorzugte Ausgestaltungen und vorteilhafte Merkmale der Erfindung ergeben sich aus den abhängigen Ansprüchen, auf deren Wortlaut an dieser Stelle verwiesen wird.

Mit der Erfindung soll unter anderem erreicht werden, den Aufwand und damit die Kosten für das Einrichten von Privilegien zu reduzieren.

Das erfindungsgemäße Verfahren basiert darauf, dass das Einbringen von Privilegien in Geräte automatisiert und ohne Intervention eines Administrators durchgeführt werden kann. Hierzu muss das Gerät vor der Auslieferung an den Besitzer oder Nutzer mit den nötigen Privilegien versehen worden sein, die dazu notwendig sind, um mit einer höher-privilegierten Instanz, die mit speziellen Privilegien zur Vergabe von Privilegien versehen ist, Privilegien für niedriger-privilegierte Instanzen einrichten zu können.

Um auf einem Gerät ein Privileg einzurichten, übermittelt eine dazu berechtigte Maschine oder Person eine höher-privilegierte Instanz zum Nutzer des Geräts oder direkt zum Gerät. Im ersten Fall bringt der Nutzer die Instanz im Gerät ein. Im zweiten Fall kann die Instanz z.B. bereits bei Auslieferung des Gerätes an den Nutzer im Gerät vorhanden sein oder über eine Luftschnittstelle zum Gerät übertragen werden. Die Instanz wird auf dem Gerät mit oder ohne Interaktion mit dem Nutzer zur Ausführung gebracht. Das Gerät kann z.B. anhand der kryptografischen Signatur auf der Instanz verifizieren, ob die Instanz dazu berechtigt ist, niedrigere Privilegien für andere Instanzen einrichten zu dürfen. Wenn das der Fall ist, erhält die Instanz z.B. den Zugriff auf die speziellen Funktionen zum Einrichten von Privilegien. Die Instanz richtet anschließend die Privilegien ein, ohne dass der Nutzer das Gerät in einen anderen Zustand versetzen muss. Nachdem die Privilegien erfolgreich eingerichtet worden sind, kann die Instanz wieder aus dem Gerät entfernt werden.

In der Folge nach dem Einrichten der neuen Privilegien können sodann dazu berechtigte Instanzen diese niedrigeren Privilegien in Anspruch nehmen.

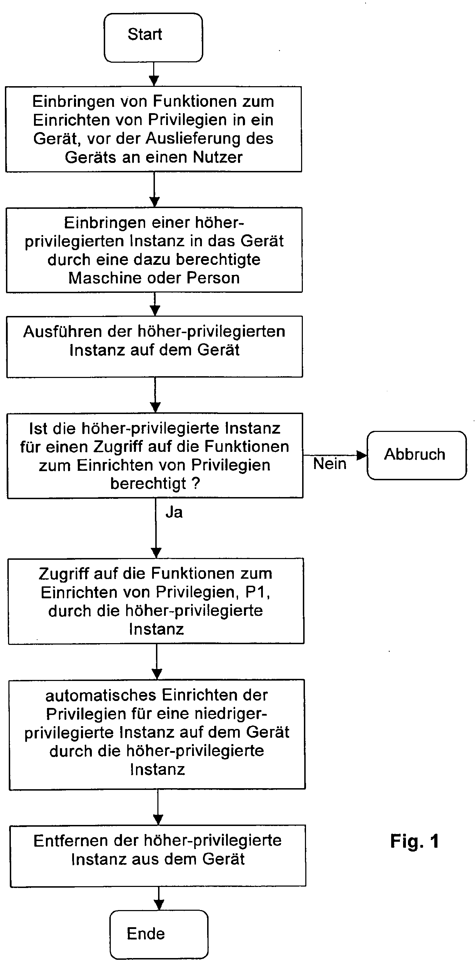

- Figur 1: zeigt einen bevorzugten Ablauf des erfindungsgemäßen Verfahrens.

## Patentansprüche

1. Verfahren zum Delegieren von Privilegien an eine niedriger-privilegierte Instanz durch eine höher-privilegierte Instanz, bei dem das Einbringen von Privilegien, P1, für eine niedriger-privilegierte Instanz in ein Daten verarbeitendes Gerät automatisiert durchgeführt wird, indem das Gerät vor der Auslieferung an einen Nutzer oder per Datenfernübertragung mit Funktionen zum Einrichten der Privilegien versehen wird, um mit Hilfe einer höher-privilegierten Instanz, die mit speziellen Privilegien, P2, zur Vergabe von Privilegien versehen ist, Privilegien, P1, für die niedriger-privilegierte Instanz einrichten können wobei zum Einrichten der Privilegien, P1, für die niedriger-privilegierte Instanz, folgende Schritte durchgeführt werden:
- Einbringen der höher-privilegierten Instanz in das Gerät durch eine dazu berechtigte Maschine oder Person,
- Ausführen der höher-privilegierten Instanz auf dem Gerät,
- Zugriff auf die Funktionen zum Einrichten von Privilegien, P1, durch die höher-privilegierte Instanz,
- automatisches Einrichten der Privilegien, P1, für die niedriger-privilegierte Instanz auf dem Gerät durch die höher-privilegierte Instanz, wobei das Gerät anhand einer kryptografischen Signatur auf der höher-privilegierten Instanz verifiziert, ob die höher-privilegierte Instanz dazu berechtigt ist, auf die Funktionen zum Einrichten von Privilegien, P1, zuzugreifen und Privilegien, P1, für eine niedriger-privilegierte Instanz einzurichten, und
wobei die höher-privilegierte Instanz aus dem Gerät entfernt wird, nachdem die Privilegien, P1, für die niedriger-privilegierte Instanz erfolgreich eingerichtet wurden..

2. Verfahren nach Anspruch 1, **dadurch gekennzeichnet, dass** die höher-privilegierte Instanz dem Nutzer zur Verfügung gestellt wird und durch diesen in das Gerät eingebracht wird.

3. Verfahren nach Anspruch 1, **dadurch gekennzeichnet, dass** die höher-privilegierte Instanz bereits bei Auslieferung des Gerätes an den Nutzer im Gerät vorhanden ist oder über eine Luftschnittstelle direkt zum Gerät übertragen wird.

4. Verfahren nach einem der Ansprüche 1 bis 3, **dadurch gekennzeichnet, dass** die höher-privilegierte Instanz automatisch im Gerät zur Ausführung gebracht wird.

5. Verfahren nach einem der Ansprüche 1 bis 3, **dadurch gekennzeichnet, dass** die höher-privilegierte Instanz durch eine Interaktion mit dem Nutzer im Gerät zur Ausführung gebracht wird.

6. Softwareapplikation mit einem Programmcode, die auf einem Daten verarbeitenden Gerät ausgeführt ein Verfahren nach einem der Ansprüche 1 bis 5 durchführt.

7. Datenverarbeitungsprogrammprodukt, das eine auf einem Daten verarbeitenden Gerät ausführbare Softwareapplikation zur Durchführung des Verfahrens nach einem der Ansprüche 1 bis 5 umfasst.

## Claims

1. Method for delegating privileges to a lower-level privilege instance by a higher-level privilege instance, in which the introduction of privileges, P1, is carried out in automated manner for a lower-level privilege instance in a data-processing device, in that the device is provided with functions for setting up the privileges before delivery to a user or by remote data transmission in order to be able to set up privileges, P1, for the lower-level privilege instance with the aid of a higher-level privilege instance which is provided with special privileges, P2, for awarding privileges, wherein to set up the privileges, P1, for the lower-level privilege instance, the following steps are carried out:
- introduction of the higher-level privilege instance into the device by a machine or person thus authorised,
- executing the higher-level privilege instance on the device,
- access to the functions for setting up privileges, P1, by the higher-level privilege instance,
- automatic setting up of the privileges, P1, for the lower-level privilege instance on the device by the higher-level privilege instance, wherein the device verifies using a cryptographic signature on the higher-level privilege instance whether the higher-level privilege instance is authorised to access the functions for setting up privileges, P1, and to set up privileges, P1, for a lower-level privilege instance, and
wherein the higher-level privilege instance is removed from the device, after the privileges, P1, for the lower-level privilege instance have been set up successfully.

2. Method according to claim 1, **characterised in that** the higher-level privilege instance is made available to the user and is introduced into the device by the latter.

3. Method according to claim 1, **characterised in that** the higher-level privilege instance is already present in the device when delivering the device to the user or is transmitted directly to the device via an air interface.

4. Method according to one of claims 1 to 3, **characterised in that** the higher-level privilege instance is executed automatically in the device.

5. Method according to one of claims 1 to 3, **characterised in that** the higher-level privilege instance is executed in the device by interaction with the user.

6. Software application with a program code which carries out a method according to one of claims 1 to 5 executed on a data-processing device.

7. Data-processing program product which comprises a software application which can be executed on a data-processing device for carrying out the method according to one of claims 1 to 5.

## Revendications

1. Procédé de délégation de privilèges à une instance moins privilégiée par une instance plus privilégiée, selon lequel l'introduction de privilèges, P1, pour une instance moins privilégiée dans un appareil informatique est réalisée de manière automatisée, l'appareil étant doté, avant la livraison à un utilisateur ou par télétransmission de données, de fonctions pour installer les privilèges pour pouvoir installer, à l'aide d'une instance plus privilégiée qui est dotée de privilèges spéciaux, P2, pour l'attribution de privilèges, des privilèges, P1, pour l'instance moins privilégiée, dans lequel pour l'installation des privilèges, P1, pour l'instance moins privilégiée, les étapes suivantes sont réalisées :
- introduction de l'instance plus privilégiée dans l'appareil par une machine ou une personne qui y sont autorisées,
- exécution de l'instance plus privilégiée sur l'appareil,
- accès aux fonctions pour installer des privilèges, P1, par l'instance plus privilégiée,
- installation automatique des privilèges, P1, pour l'instance moins privilégiée sur l'appareil par l'instance plus privilégiée, dans lequel l'appareil vérifie à l'aide d'une signature cryptographique sur l'instance plus privilégiée pour voir si l'instance plus privilégiée est autorisée à accéder aux fonctions pour installer des privilèges, P1, et à installer des privilèges, P1, pour une instance moins privilégiée, et
dans lequel l'instance plus privilégiée est supprimée de l'appareil après que les privilèges, P1, pour l'instance moins privilégiée ont été installés avec succès.

2. Procédé selon la revendication 1, **caractérisé en ce que** l'instance plus privilégiée est mise à la disposition de l'utilisateur et est introduite par celui-ci dans l'appareil.

3. Procédé selon la revendication 1, **caractérisé en ce que** l'instance plus privilégiée existe dans l'appareil dès la livraison de l'appareil à l'utilisateur ou est transmise directement à l'appareil par une interface aérienne.

4. Procédé selon l'une des revendications 1 à 3, **caractérisé en ce que** l'instance plus privilégiée est mise à exécution automatiquement dans l'appareil.

5. Procédé selon l'une des revendications 1 à 3, **caractérisé en ce que** l'instance plus privilégiée est mise à exécution par une interaction avec l'utilisateur dans l'appareil.

6. Application logicielle avec un code de programme qui, exécuté sur un appareil informatique, réalise un procédé selon l'une des revendications 1 à 5.

7. Produit de programme informatique qui comprend une application logicielle, exécutable sur un appareil informatique, pour la réalisation du procédé selon l'une des revendications 1 à 5.
